# FASCICULE DE BREVET EUROPEEN

(11) **EP 1 554 879 B1**
(45) Date de publication et mention de la délivrance du brevet: **31.03.2010**
(21) Numéro de dépôt: 03780296.4
(22) Date de dépôt: 24.10.2003
(51) Int. Cl.: H04N 7/167, H04N 7/16

(54) **DISPOSITIF POUR LA TRANSFORMATION DE CONTENUS MULTIMEDIAS ET AUDIOVISUELS DE TYPE MPEG-2 EN CONTENUS SECURISES DE MEME TYPE**
VORRICHTUNG ZUR UMWANDLUNG VON MPEG-2-MULTIMEDIA- UND -AUDIOVIDEO-INHALTEN IN GESICHERTE INHALTE VON GLEICHEM TYP
DEVICE FOR THE TRANSFORMATION OF MPEG-2-TYPE MULTIMEDIA AND AUDIOVISUAL CONTENT INTO SECURE CONTENT OF THE SAME TYPE

(30) Priorité: 25.10.2002 FR 0213397
(43) Date de publication de la demande: 20.07.2005
(73) Titulaire: NAGRA FRANCE SAS, 75015 Paris (FR)
(72) Inventeur: LECOMTE, Daniel, F-75116 Paris (FR); GEORGES, Sébastien, 92300 Levallois Perret (FR)
(74) Mandataire: Leman Consulting S.A.
(86) Numéro de dépôt international: PCT/FR2003/050106
(87) Numéro de publication internationale: WO 2004/040895

(56) Documents cités:
- EP-A- 1 033 880
- EP-A- 1 365 589
- WO-A-01/97520
- US-A1- 2002 018 565

## Description

La présente invention concerne le brouillage de n'importe quel programme ou séquence multimédia utilisant un format de flux nominal de type MPEG-2 de façon à réaliser par des utilisateurs autorisés, l'accès conditionnel, la diffusion sécurisée, le contrôle de l'enregistrement, de la copie privée et de la visualisation de ces programmes ou séquences multimédias et propose un système de transformation sécurisé pour le traitement, l'accès, la diffusion, la distribution, l'enregistrement, la copie privée, la visualisation et la gestion des droits de programmes et de séquences vidéo ou multimédia interactifs.

Le problème général est de fournir un dispositif capable de transmettre de façon sécurisée un ensemble de films de haute qualité visuelle à un format de type MPEG-2 en direct vers un écran de visualisation comme par exemple un écran de télévision ou pour être enregistré sur le disque dur d'un boîtier reliant le réseau de télétransmission à un écran de type moniteur, écran de télévision, vidéo projecteur ou écran de cinéma tout en préservant la qualité audiovisuelle mais en évitant toute utilisation frauduleuse comme la possibilité de faire des copies pirates de films ou de programmes audiovisuels enregistrés sur le disque dur du boîtier décodeur.

L'invention permet également un contrôle total de l'utilisation des copies et des droits attachés aux oeuvres ainsi distribuées.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (boucle locale radio), via des réseaux DAB (Digital Audio Broadcasting), via des réseaux RTC (Réseau Téléphonique Commuté) ou encore via des réseaux de télécommunications numériques (GSM, GPRS, UMTS, etc.). Par ailleurs, pour éviter le piratage des oeuvres ainsi diffusées, ces dernières sont souvent cryptées par divers moyens bien connus de l'homme de l'art.

Toutefois, l'inconvénient principal de toutes les solutions actuelles (TiVo Inc., WO00165762) est qu'il faut transmettre non seulement les données cryptées vers les utilisateurs, mais également les clés de décryptage. La transmission des clés de décryptage pouvant se faire avant, en même temps ou après la transmission des programmes audiovisuels. Pour augmenter la sécurité et donc la protection des oeuvres audiovisuelles contre une utilisation mal intentionnée, les clés de décryptage ainsi que les fonctions de décryptage des décodeurs audiovisuels peuvent comporter des moyens de sécurité améliorés comme des changements continus des clés de cryptage tout au long d'un même programme audiovisuel, ou des cartes à puces ou autres clés physiques qui peuvent en option, être mises à jour à distance.

Ainsi, les solutions actuelles appliquées à un boîtier décodeur avec possibilité d'enregistrement local de programmes audiovisuels sous forme numérique sur un support quelconque de type disque dur ou autre type de mémoire, offrent à un usager mal intentionné, la possibilité de faire des copies non autorisées des programmes ainsi enregistrés, puisqu'à un moment donné, cet usager possède avec son boîtier décodeur numérique, associé ou pas à des systèmes de cartes à puce, toutes les informations, programmes logiciels et données permettant le décryptage complet des programmes audiovisuels. En raison justement du fait qu'il possède toutes les données, l'usager mal intentionné aura la possibilité de faire des copies illégales sans que personne ne s'aperçoive de cette copie frauduleuse au moment où elle est faite.

Une solution consisterait donc à transmettre tout ou partie d'un programme audiovisuel numérique uniquement à la demande (services de vidéo à la demande) à travers un réseau de télécommunication large bande de type ADSL, câble ou satellite, sans autoriser l'enregistrement local des programmes audiovisuels. Le document WO0011871 (Open Entertainment) propose ainsi une solution de distribution de fichiers multimédias sur requête de l'utilisateur. Ici, l'inconvénient est tout autre et provient des performances de ces réseaux qui ne permettent pas de garantir des flux continus de quelques mégabits par seconde à chaque usager, comme exigé par les flux MPEG-2 qui nécessitent des bandes passantes de quelques dizaines de kilobits à plusieurs mégabits par seconde.

Dans ces conditions, une solution consiste à séparer le flux en deux parties dont aucune ne serait utilisable seule. Dans cette optique plusieurs brevets ont été déposés. Ainsi, on connaît par le document WO09908428 (Gilles Maton) un procédé de traitement multi-applicatif d'un terminal actif localisable dans lequel on réalise au moins une liaison avec un programme identifiable dédié à l'exécution d'une application, ledit programme dictant ses conditions d'exploitation au terminal pour la mise à disposition des fonctions. Le terminal dialogue ponctuellement, par l'emploi d'une liaison, avec le centre de gestion pour la réalisation, si nécessaire, des entrées et sorties des capacités de ce dernier, le centre de gestion devenant esclave ou non du terminal au niveau de l'applicatif vis-à-vis du programme entrant. Cette invention concerne également le procédé d'identification du programme et du terminal en exploitation. Ce procédé de l'art antérieur divise le flux en une partie servant à identifier l'utilisateur et une partie qui contient le programme à proprement parler. En particulier, ledit programme n'est pas inutilisable mais seulement verrouillé par la première partie.

L'art antérieur connaît également le document US 2002 / 0018565 qui revendique une méthode et un système de contrôle d'accès d'un flux multimédia normalisé. Cet art antérieur repose sur l'utilisation de méthodes de cryptage sélectives qui gardent le flux binaire conforme à son standard d'origine. L'utilisateur autorisé doit se servir d'une clé de décryptage s'il veut avoir accès au flux vidéo. La protection est effectuée en trois étapes : extraction de mots codés, cryptage des mots codés et re-insertion des mots codés cryptés dans le flux binaire. Un exemple de réalisation particulier aux vecteurs de mouvement est cité avec des flux de type de MPEG-4. Toutefois, la protection des vecteurs de mouvement du flux s'appuie sur des méthodes de cryptage bien connues par l'homme de l'art. Le contenu initial du flux se trouve intégralement dans le flux protégé. Etant donné que la solution de cet art antérieur conserve toutes les données d'origine au sein du flux protégé, il ne répond pas aux critères de haute sécurisation, objet de la présente invention.

D'autre part, le document EP0778513 (Matsushita) décrit un procédé permettant de prévenir l'utilisation illégale d'une information en y ajoutant une information de contrôle afin de vérifier les droits de l'utilisateur. Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale.

Le document WO0049483 (Netquartz) nous offre également des procédés et des systèmes pour créer un lien entre les utilisateurs et un éditeur d'entités numérisées. Le procédé comprend l'une au moins des étapes suivantes : l'étape de subdiviser ladite entité numérisée en deux parties ; l'étape de mémoriser une partie dans une zone mémoire d'un serveur connecté à un réseau informatique ; l'étape de transmettre l'autre partie à au moins un utilisateur disposant d'un équipement informatique ; l'étape de connecter ledit équipement informatique audit réseau informatique ; l'étape d'établir un lien fonctionnel entre ladite première partie et ladite deuxième partie. Ces procédés et systèmes ne spécifient pas si la partie mémorisée sur le serveur peut être stockée par l'utilisateur ce qui permettrait à celui-ci de pirater ladite entité numérisée.

L'art antérieur connaît également par la demande de brevet français WO 01/97520 « Dispositif d'interfaçage vidéo, système de distribution et méthode de transfert de programmes et de séquences vidéo encodées à travers le réseau de communication » un dispositif pour la diffusion sécurisée de flux vidéo protégés. La protection du flux vidéo est effectuée en remplaçant certaines images I originales par des « fausses » images I ou en permutant certaines images I entre elles. Les images I originales extraites du flux vidéo sont stockées séparément du flux protégé et sont envoyées à l'utilisateur lorsqu'il souhaite visualiser la vidéo. Ainsi, remplacer les images I originales par des « fausses » images I modifie la taille du flux protégé par rapport au flux original. Par ailleurs, un usager mal intentionné détecte facilement une fausse Image I d'indice n, car cette image d'indice n est très différente de l'image I d'indice n-1 et de l'image I d'indice n+1 ; il peut alors facilement la remplacer par l'image I d'indice n-1 ou d'indice n+1, ou par une image calculée par interpolation entre les images I d'indice n-1 et n+1, et recréer ainsi un flux très proche de l'original. De plus, dans un flux MPEG-2, les images I ne représentent environ qu'une image sur 12 ou 15, ne pas modifier les 11 images P et B restantes ne dégradent pas suffisamment la vidéo, en particulier parce que ces images P et B contiennent également des macroblocks intra qui viennent « reconstituer » l'image. De même, substituer l'ensemble d'une image I est une modification assez grossière, facilement décelable par un automate chargé de reconstituer la vidéo. La solution proposée dans cet art antérieur ne répond donc pas aux critères de haute sécurité et de forte dégradation visuelle de flux vidéos, objets de la présente invention.

Enfin, dans cette approche, l'état de la technique le plus proche se retrouve dans les brevets d'HyperLOCK Technologies dont le plus pertinent est le document US05937164. Cette invention utilise la solution qui consiste à séparer le flux en deux parties dont la plus petite détient une information nécessaire à l'utilisation de la plus grande. Cependant, ce brevet n'est pas suffisant pour répondre au problème identifié. En effet, la suppression d'une partie du flux dénature le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue. Ainsi, un utilisateur mal intentionné détectera très facilement les données dénaturées, justement par la non conformité du flux après séparation.

Cette société a également déposé trois autres brevets : le document US5892825 reprend le brevet précédent mais dans un cadre moins large car les flux y sont toujours cryptés ; le document US6035329 repose sur le même principe, il concerne un procédé permettant la lecture d'un disque de type CD-ROM ou DVD-ROM conditionnellement à l'identification des droits par l'insertion d'une carte à puce sur laquelle les informations nécessaires à la lecture sont stockées. Ce procédé n'est encore pas suffisant pour notre problème car il ne garantit pas que le flux modifié soit du même format que le flux originel. Enfin, le document US6185306 concerne un procédé de transmission de données cryptées depuis un site Web vers un ordinateur demandeur. Ce procédé permet cependant à l'utilisateur de disposer à un moment donné de tous les outils nécessaires pour copier les données.

Afin de corriger ces différents défauts, l'invention concerne un procédé pour la distribution de séquences vidéos selon un format de flux nominal constitué de données représentant une succession d'images dont certaines sont codées par prédiction à partir d'autres images du flux comme c'est le cas avec la norme MPEG-2.

Pour l'homme de l'art, un flux vidéo de type MPEG-2 se décompose sous la forme d'une succession d'images de types différents dont certaines contiennent des vecteurs de mouvement. Les trois types d'images présentes dans un flux de type MPEG-2 sont : les images I (pour Intra), qui sont transmises entièrement (la valeur de chaque pixel de l'image est transmise) ; les images P (prédites), dont au moins une partie est calculée à partir de l'image I ou P qui précède ; les images B (bidirectionnelles) dont au moins une partie est calculée à partir des images I et/ou P précédentes et suivantes. Les images B et P sont prédites du point de vue du mouvement et du point de vue de la valeur des pixels. Les images I ne contiennent donc pas d'information sur le mouvement.

Le macrobloc est l'unité de base pour le calcul de la compensation de mouvement. Les macroblocs de chaque image sont codés successivement, de gauche à droite, et de haut en bas. Chaque macrobloc est composé de plusieurs blocs 8x8 (6 dans le cas du 4 :2 :0): quatre blocs de luminance, un ou plusieurs blocs de chrominance Cb et un ou plusieurs blocs de chrominance Cr. À noter que les blocs de luminance couvrent la même zone de l'image que les blocs de chrominance dans chacune des composantes, du fait du sous-échantillonnage des informations de chrominance, effectué pour adapter le codage à la sensibilité du système visuel humain. L'en-tête des macroblocs contient le type de codage qui est nécessaire lors du décodage et de l'analyse des vecteurs de mouvement décodés. Chaque cas de prédiction (de champ ou de trame) permet au décodeur d'utiliser les vecteurs de mouvement différentiels d'une façon différente afin de reconstruire l'image.

Les images prédites P sont donc codées avec deux types d'information différents :
- une prédiction de mouvement qui détermine pour chaque macrobloc de l'image calculée la zone de l'image de référence à partir de laquelle il est prédit ; cette prédiction de mouvement est exprimée sous forme d'un vecteur ;
- une erreur de prédiction qui précise pour chaque macrobloc de l'image calculée les différences entre les valeurs prédites obtenues par compensation de mouvement et les valeurs réelles des pixels du macrobloc codé.

Dans le cas d'une image B, un macrobloc est prédit à l'aide de deux prédictions différentes, la première étant basée sur une image antérieure, la deuxième sur une image future, ces deux prédictions étant alors moyennées pour former la prédiction utilisée pour la compensation de mouvement. Dans une telle image, ce sont donc deux vecteurs qui sont transmis de façon à pouvoir former une prédiction.

Dans certains cas, des macroblocs d'une image prédite sont transmis entièrement (comme dans une image Intra). Ces macroblocs sont appelés macroblocs Intra.

L'invention a pour objet un procédé, un équipement et un système selon les revendications.

L'invention concerne selon son acception la plus générale un procédé pour la distribution de séquences vidéos selon un format de flux nominal constitués par une succession d'images, chaque image étant constituée d'une succession de blocs, et dans lequel au moins un desdits blocs dans au moins une desdites images est calculé par prédiction de mouvement par rapport à une image dite de référence, ladite prédiction de mouvement étant codée dans le flux avec au moins un vecteur de mouvement, ledit flux sur lequel on procède, avant la transmission à l'équipement client, à une analyse du flux pour générer un premier flux modifié, présentant le format d'un flux nominal, et présentant des images modifiées par la substitution de certaines données par des données de même nature mais aléatoires, et un deuxième flux d'un format quelconque, comportant les données substituées et les informations numériques aptes à permettre la reconstruction dudit flux modifié, puis à transmettre séparément, en temps réel ou en temps différé les deux flux ainsi générés depuis le serveur vers l'équipement destinataire, et pour lequel on calcule sur l'équipement destinataire une synthèse d'un flux au format nominal en fonction dudit premier flux et dudit deuxième flux et où ladite modification consiste à modifier au moins un desdits vecteurs de mouvement par substitution de certaines valeurs des vecteurs de mouvement par des valeurs de même nature mais aléatoires, et que ledit deuxième flux comporte les valeurs des vecteurs de mouvement substituées et les informations numériques aptes à permettre la reconstruction desdites images modifiées.

Selon un mode de réalisation particulier de l'invention, le format de flux nominal est défini par la norme MPEG-2.

De préférence, ladite analyse décide des valeurs des vecteurs de mouvement à modifier en fonction de la taille voulue pour ledit deuxième flux et de la dégradation désirée pour ledit premier flux modifié.

Selon un mode de réalisation de l'invention, la transmission dudit premier flux est réalisée à travers un réseau large bande [câble, satellite, numérique hertzien, fibre optique, DSL (Digital Subscriber Line), BLR (boucle locale radio)] ou DAB [Digital Audio Broadcasting].

Dans un mode de réalisation particulier de l'invention, la transmission dudit deuxième flux est réalisée à travers un réseau téléphonique commuté (RTC analogique ou numérique), ou à travers un réseau de type DSL (Digital Subscriber Line) ou à travers un réseau BLR (boucle locale radio) ou à travers un réseau téléphonique mobile utilisant les normes GSM, GPRS ou UMTS.

Dans un autre mode de réalisation de l'invention, la transmission dudit deuxième flux est réalisée à travers un support matériel distribué physiquement [carte à mémoire flash, carte à puce].

L'invention concerne également un équipement pour la fabrication d'un flux vidéo, comportant au moins un serveur multimédia contenant les séquences vidéos originelles, au moins une interface d'enregistrement de stockage du contenu d'un premier flux, ledit équipement étant apte à coopérer avec un agencement d'interfaçage vidéo et au moins une interface d'affichage, ledit équipement comportant un dispositif d'analyse du flux vidéo provenant dudit serveur pour générer ledit premier flux modifié par substitution de certaines valeurs d'au moins un des vecteurs de mouvement par des valeurs de même nature mais aléatoires, et un deuxième flux comportant les valeurs des vecteurs de mouvement substituées, et un moyen de recomposition du flux original à partir des deux flux.

L'invention porte enfin sur un système pour la transmission d'un flux vidéo comprenant un équipement de production d'un flux vidéo, et au moins un décodeur d'un flux vidéo et au moins un réseau de communication entre l'équipement de production et le(s) décodeur (s).

La présente invention concerne un procédé de diffusion de contenus audiovisuels sécurisé grâce aux informations de prédiction de mouvement.

En fonction du format du flux Vidéo (entrelacé ou progressif) les différentes images sont décodées à partir de trames ou de champs. Une trame (« frame » en anglais) contient les lignes d'information spatiale d'un signal vidéo. Dans le cas d'une vidéo entrelacée, la trame consiste en 2 champs (« field »), un supérieur (« top-field ») et un inférieur (« bottom-field »). Un champ contient un ensemble de lignes alternées. La prédiction de trame (« frame-based prediction ») est un mode de prédiction qui utilise les 2 champs de la trame de référence. La prédiction de champ (« field-based prediction ») est un mode de prédiction qui n'utilise qu'un champ de la trame de référence. Toujours dans le cas de l'entrelacement, la norme MPEG-2 autorise la trame à être encodée comme image, ou bien les deux champs à être encodés comme deux images. Ce type d'encodage est variable d'une trame à l'autre, l'encodage de champ étant préféré quand la séquence visuelle présente beaucoup de mouvement. Dans ce cas, le second champ est prédit à partir du premier.

Le processus de compensation de mouvement forme des prédictions à partir des images décodées précédemment (dans la chronologie du processus de décodage), qui, une fois combinées avec les coefficients de DCT décodés, permettent de reconstruire l'image.

Le flux Vidéo de type MPEG-2 contient pour chaque macrobloc prédit, de l'information codée déterminant la zone de l'image de référence la plus proche visuellement du macrobloc courant. Cette information codée est représentée sous forme de vecteur, on parle donc de « vecteurs de mouvement ». Un macrobloc peut faire référence à plusieurs images ou champs différents. Il peut donc y avoir plusieurs vecteurs de mouvement pour un macrobloc.

En fonction du type de l'image (P ou B) et du type de prédiction utilisé (champ ou trame), un certain nombre de prédictions (issues de vecteurs de mouvement différents) séparées sont formées pour chaque macrobloc (cas des images B où l'on a des vecteurs faisant référence aux informations précédentes (dans l'ordre de restitution du flux) - vecteurs dits « en avant » (Forward) - et suivantes - vecteurs dits en « arrière » (Backward), et celles-ci sont combinées lors du décodage afin d'obtenir au final une seule prédiction.

Dans le cas de macroblocs Intra, aucune prédiction n'est formée. Cependant ces blocs peuvent également transporter des vecteurs de mouvement (« concealment motion vectors ») utilisés pour la correction de coefficients perdus lors de la transmission, mais ce cas particulier ne concerne pas l'invention.

Seuls les macroblocs des images B ou P comportent des vecteurs de mouvement qui sont amenés à être transformés par l'invention. Chaque vecteur de mouvement se décompose en une composante horizontale et une composante verticale, chacune ayant potentiellement une valeur résiduelle. Chaque composante est codée de manière différentielle par rapport aux vecteurs de mouvement décodés précédemment, ce qui signifie que lors du décodage d'un vecteur de prédiction d'un macrobloc, on ajoute la composante codée dans le macrobloc considéré à la dernière valeur complètement décodée. Chaque composante est codée de la même façon : par un champ principal (motion_code dans MPEG-2) codé par une technique de VLC (« Variable Length Code » : Codage à longueur variable ; technique de codage qui alloue une petite valeur en nombre de bits à un événement fréquent, alors qu'une valeur rare sera représentée par un code plus long) et un champ résiduel (motion_residual dans MPEG-2) codé sur un nombre de bits dépendant d'autres champs présents dans le flux. L'invention concerne la modification de la composante principale et / ou de la composante résiduelle.

Le changement de valeur des composantes des vecteurs de mouvement modifie fortement la perception du flux MPEG-2 affiché sur un dispositif de visualisation classique. Il est de plus possible de modifier les valeurs des composantes des vecteurs de mouvement sans modifier le format du flux MPEG-2. Une des méthodes proposées par la présente invention consiste à remplacer les codes VLC du flux MPEG-2 par d'autres codes VLC valides du point de vue de la norme MPEG-2, mais qui changeront l'affichage du flux. Les effets visuels sont multiples : tremblements de l'image, effet de liquéfaction, ou de pixellisation, inversion du mouvement, le tout rendant la perception visuelle du flux inexploitable et très pénible pour l'oeil humain.

Les modifications possibles pour endommager le flux sont : remplacer des vecteurs de mouvement différentiels d'une image P ou B par des vecteurs de mouvement différentiels d'une autre image P ou B, intervertir deux vecteurs de mouvement différentiels d'une même image P ou B, intervertir deux vecteurs de mouvement différentiels de deux images P ou B du même flux, remplacer des vecteurs de mouvement différentiels d'une image P ou B par des valeurs aléatoires, inverser la valeur d'un ou plusieurs bits bien choisis de la valeur des vecteurs de mouvement différentiels d'une image P ou B, remplacer des vecteurs de mouvement différentiels d'une image P ou B par le résultat d'un calcul appliqué sur ces vecteurs, ledit calcul étant une addition, une soustraction, une multiplication, une manipulation binaire, ou tout autre opération mathématique, paramétrée ou non à l'aide d'une clé numérique.

La présente invention consiste en particulier à appliquer une de ces transformations au flux d'origine et à stocker dans un deuxième flux les informations nécessaires pour reconstruire ledit flux d'origine. Ces informations contiennent notamment des informations ôtées du flux d'origine, et des données indiquant comment et où les insérer lors de la phase de reconstitution du flux d'origine, et/ou des informations permettant de remettre dans l'ordre des informations du flux d'origine, par exemple quand la modification consiste à intervertir deux vecteurs de mouvement différentiels de deux images P ou B du même flux, et / ou des informations indiquant le calcul et les éventuelles clés numériques associées à appliquer sur les vecteurs modifiés de manière à retrouver les vecteurs originaux.

Avantageusement, les modifications appliquées au flux d'origine sont choisies en fonction de la taille voulue pour ledit deuxième flux.

Avantageusement, ladite analyse décide des images P et B à modifier en fonction de la taille voulue pour ledit deuxième flux.

Avantageusement, ladite analyse décide des images P et B à modifier en fonction du niveau de dégradation désiré pour ledit premier flux modifié.

Dans une mise en oeuvre particulière de ce procédé, la transmission dudit premier flux est réalisée à travers un support matériel distribué physiquement comme un CD-ROM, un DVD, un disque dur ou une carte à mémoire de type mémoire flash par exemple.

Dans une autre mise en oeuvre de ce procédé, la transmission dudit premier flux est réalisée à travers un réseau large bande (câble, satellite, fibre optique, hertzien, DSL, DAB, UMTS, etc.).

Selon la mise en oeuvre de ce procédé, la transmission dudit deuxième flux est réalisée à travers un réseau câblé, à travers un réseau téléphonique commuté (RTC analogique ou numérique), à travers un réseau téléphonique mobile utilisant les normes GSM, GPRS ou UMTS, à travers un réseau BLR (boucle locale radio) ou à travers un réseau de type DSL.

Selon une variante particulière de ce procédé, la transmission dudit deuxième flux est réalisée à travers un réseau large bande de même type que le réseau utilisé par ledit premier flux, voire à travers le même réseau.

Selon une variante particulière de ce procédé, la transmission dudit deuxième flux est réalisée au moyen d'une carte mémoire de type mémoire flash ou au moyen d'une carte à puce.

Avantageusement, la transmission d'un des deux flux ou des deux flux est chiffrée.

Selon la mise en oeuvre de ce procédé, les deux flux générés peuvent être destinés à un seul équipement, à un groupe d'équipement ou à tous les équipements.

Selon un mode de réalisation particulier, la reconstruction est conditionnée par une transaction.

La reconstruction peut également être autorisée pour une consultation d'une copie privée demandée par le client.

De manière générale, le fait que la reconstruction soit conditionnée à l'autorisation d'un portail permet à tout opérateur du service de gérer tous les droits attachés aux oeuvres audiovisuelles.

De plus, l'invention concerne un équipement pour la fabrication d'un flux vidéo, comportant au moins un serveur multimédia contenant les séquences vidéos originelles, au moins une interface d'enregistrement de stockage du contenu d'un premier flux, ledit équipement étant apte à coopérer avec un agencement d'interfaçage vidéo et au moins une interface d'affichage, ledit, équipement comportant un dispositif d'analyse du flux vidéo provenant dudit serveur pour générer ledit premier flux modifié par substitution de certaines valeurs d'au moins un des vecteurs de mouvement par des valeurs de même nature mais aléatoires, et un deuxième flux comportant les valeurs des vecteurs de mouvement substituées, et un moyen de recomposition du flux original à partir des deux flux.

Avantageusement, cet équipement comporte une mémoire pour l'enregistrement d'un marqueur « copie privée » indiquant pour chaque séquence les droits de chaque utilisateur : copie privée pouvant être regardée un nombre illimité de fois, copie privée pouvant être regardée un nombre limité de fois et quel nombre, copie privée interdite.

En outre, l'invention concerne un équipement pour l'exploitation d'un flux vidéo en vue de la mise en oeuvre de ce procédé comprenant un décodeur standard de flux, au moins une interface d'enregistrement (disque dur, mémoire type mémoire flash) destiné à stocker le contenu dudit premier flux et/ou un lecteur de disques (CD, DVD, etc.) et au moins une interface d'affichage (écran standard, écran sans fil, vidéo projecteur) **caractérisé en ce qu**'il comporte un moyen pour la recomposition du flux originel à partir des deux flux.

Selon un mode de réalisation particulier, ledit moyen est une application logicielle installée sur l'équipement.

Selon un autre mode de réalisation, ledit moyen est un dispositif électronique fixe.

Selon un autre mode de réalisation, ledit moyen est un dispositif électronique portable (mobile) avec son écran incorporé.

Selon un mode de réalisation où l'équipement est installé sur un ordinateur, ledit moyen utilise une ressource spécifique au produit (carte) afin d'éviter la copie de l'information temporaire du deuxième flux sur un support permanent.

Avantageusement, ladite interface d'enregistrement stocke aussi un marqueur « copie privée » en relation avec ledit premier flux indiquant pour cette séquence les droits de l'utilisateur : copie privée pouvant être regardée un nombre illimité de fois, copie privée pouvant être regardée un nombre limité de fois et quel nombre, copie privée interdite.

Avantageusement, l'équipement comprend un lecteur de cartes à puce permettant d'identifier l'usager.

Avantageusement, l'équipement comprend un lecteur de cartes à puce, la carte à puce contenant les applications logicielles.

Avantageusement, l'équipement comprend un lecteur de cartes à puce, la carte à puce contenant les données dudit deuxième flux pour un contenu donné.

Enfin, l'invention concerne un système pour la transmission d'un flux vidéo comprenant un équipement de production d'un flux vidéo, et au moins un décodeur d'un flux vidéo et au moins un réseau de communication entre l'équipement de production et le(s) décodeur (s).

La présente invention sera mieux comprise à la lecture de la description d'un exemple non limitatif de réalisation qui suit, se référant aux dessins annexés où :
- la figure 1 décrit l'architecture d'ensemble d'un système pour la mise en oeuvre du procédé selon l'invention
- la figure 2 représente un mode de réalisation particulier du système d'analyse et de synthèse de flux conforme à l'invention
- la figure 3 représente un mode de réalisation particulier du système de synthèse de flux conforme à l'invention.

L'invention concerne un flux de données d'un format nominal, notamment mais non exclusivement un flux de type MPEG-2. Le format du flux audiovisuel utilisé doit avoir les caractéristiques suivantes :

Ce format doit décomposer les données en une série d'images, chaque trame pouvant être complète (image I) ou prédite (image P), calculée à partir de techniques de compensation de mouvement prenant pour référence l'image I ou P précédente.

Optionnellement, au moins une image B calculée à partir de techniques de compensation de mouvement prenant pour références les images I et/ou P précédente et suivante est présente dans le flux nominal.

L'invention concerne un flux de données d'un format nominal, notamment mais non exclusivement un flux de type MPEG-2. Le format du flux audiovisuel utilisé doit avoir les caractéristiques suivantes :
- ce format doit décomposer les données en une série d'images, ladite série comprenant au moins une image P ;
- au moins une image P contient des vecteurs de mouvement.

Dans la description qui suit, l'exemple concerne un flux MPEG-2 sans que cela ne constitue une limitation de la portée de la protection.

Le principe général d'un procédé de sécurisation d'un flux vidéo est exposé ci-après.

L'objectif est par exemple d'autoriser les services de vidéo à la demande et à la carte à travers tous ces réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via un réseau de transmission au moment de la visualisation dudit programme audiovisuel numérique préenregistré chez l'usager.

La plus grande partie du flux audiovisuel sera donc transmise via un réseau de diffusion classique alors que la partie manquante sera envoyée à la demande via un réseau de télécommunication bande étroite comme les réseaux téléphoniques classiques de type RTC ou les réseaux cellulaires de type GSM, GPRS ou UMTS ou en utilisant une petite partie d'un réseau de type DSL ou BLR, ou encore en utilisant un sous-ensemble de la bande passante d'un réseau large bande comme sur un réseau câblé ou à fibres optiques.

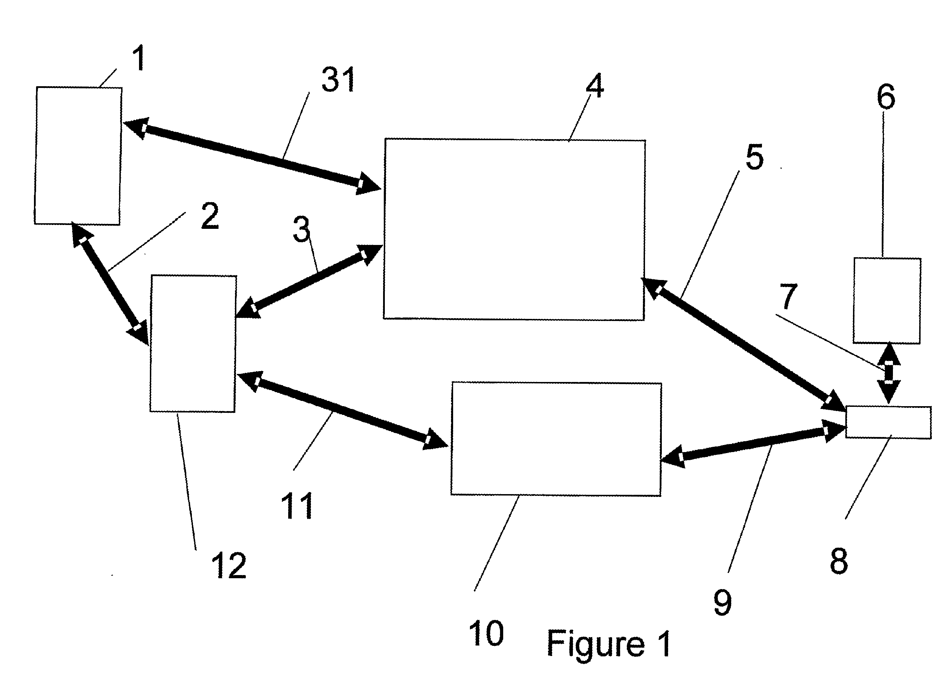

Sur le dessin en annexe, la figure 1 est un schéma de principe d'un système de distribution selon la présente invention.

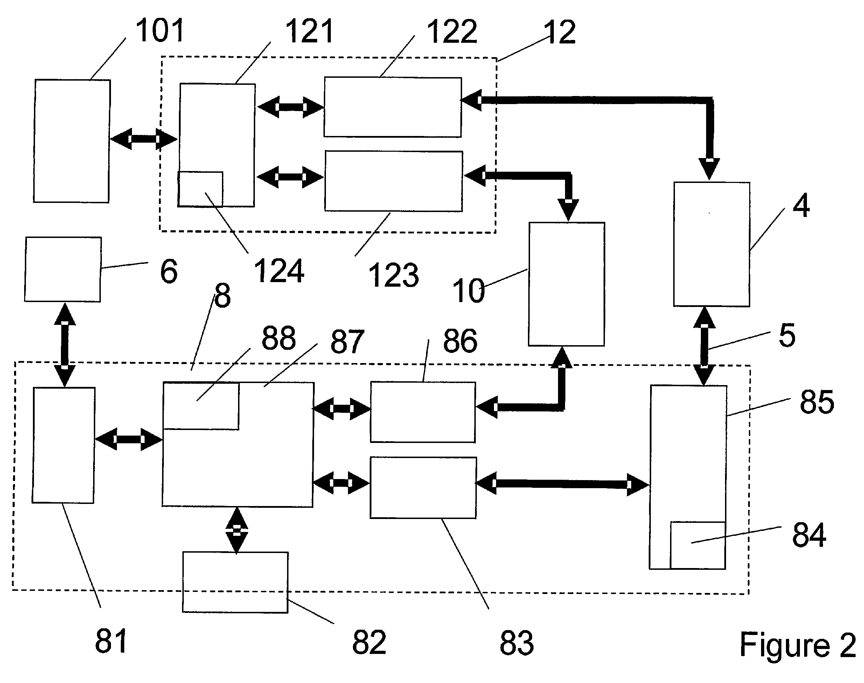

La figure 2 représente un mode de réalisation particulier du système d'analyse et de synthèse de flux conforme à l'invention.

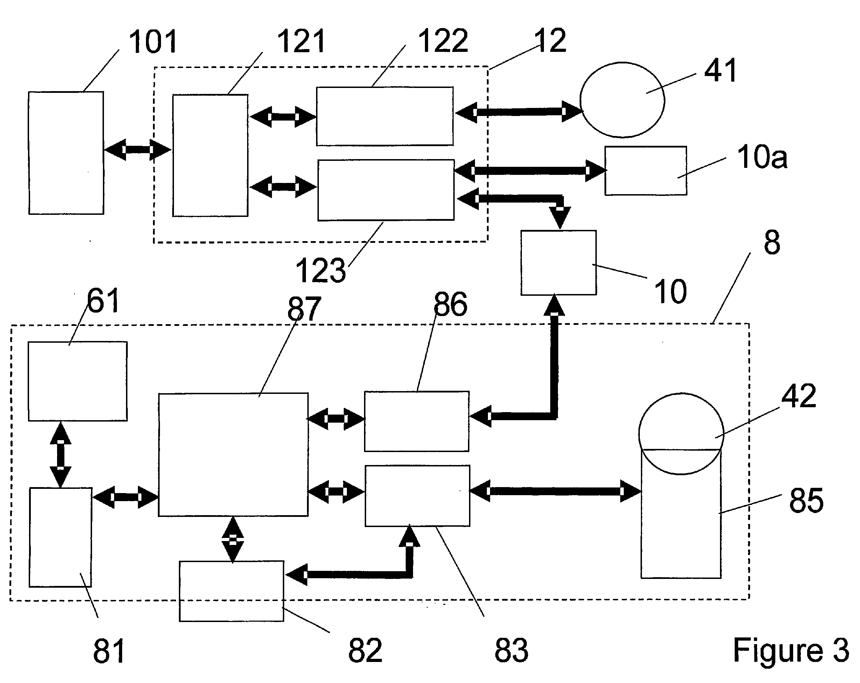

La figure 3 représente un mode de réalisation particulier du système de synthèse de flux conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier décoder et désembrouiller tout flux vidéo de type MPEG-2 selon un programme logiciel de décodage et désembrouillage pré-chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur optionnel du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) il est prévu de conserver une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

La compression MPEG-2 commence donc, dans un premier temps, par décomposer l'image en différentes matrices carrées comportant plusieurs points ou pixels, ayant chacun leur propre valeur calorimétrique. Un calcul permet d'obtenir une valeur moyenne pour chaque matrice au sein de laquelle chaque point est maintenant noyé. Ce traitement génère une pixellisation et l'apparition d'aplats uniformes, là où existaient des nuances de teinte. La deuxième étape de la compression MPEG-2 consiste à ne conserver d'une image à l'autre que les éléments changeants.

La vidéo est représentée comme une succession d'images individuelles, dont chacune est traitée comme une matrice bi dimensionnelle d'éléments d'image (pixels). La représentation des couleurs de chaque pixel comprend trois composantes : une composante de luminance Y et deux composantes de chrominance, Cb et Cr.

La compression de la vidéo numérisée est réalisée par l'utilisation de plusieurs techniques : sous échantillonnage d'informations de chrominance pour s'adapter à la sensibilité du système visuel humain (HVS), quantification, compensation du mouvement (MC) pour exploiter la redondance temporelle, transformation dans le domaine fréquentiel par la transformation en cosinus discrète (DCT) pour exploiter la redondance spatiale, codage à longueur variable (VLC) et interpolation d'images.

Le système visuel humain (HVS) étant le plus sensible à la résolution de la composante de luminance d'une image, les valeurs de pixel Y sont codées à pleine résolution. Le système visuel humain est moins sensible aux informations de chrominance. Le sous-échantillonnage élimine les valeurs de pixels basées systématiquement sur la position, ce qui réduit la quantité d'informations à comprimer par d'autres techniques. La norme conserve ainsi un ensemble de pixels de chrominance pour chaque voisinage 2x2 de pixels de luminance dans le cas du format 4 :2 :0.

L'unité de codage de base d'une image est le macrobloc. Les macroblocs de chaque image sont codés successivement, de gauche à droite, et de haut en bas. Chaque macrobloc est composé de plusieurs blocs 8x8 : quatre blocs de luminance, un ou plusieurs blocs de chrominance Cb et un ou plusieurs blocs de chrominance Cr. À noter que les blocs de luminance couvrent la même zone de l'image que les blocs de chrominance, du fait du sous-échantillonnage des informations de chrominance, effectué pour adapter le codage à la sensibilité du système visuel humain.

Pour un macrobloc donné, la première opération est le choix du mode de codage qui dépend du type d'image, de l'efficacité de la prédiction compensée en mouvement dans la région codée, et de la nature du signal contenu dans le bloc. Deuxièmement, une prédiction compensée en mouvement du contenu du bloc, basée sur des images de référence antérieure ou future est formée. Cette prédiction est soustraite des données réelles du macrobloc courant, pour former un signal d'erreur. Troisièmement, ce signal d'erreur est divisé en blocs 8x8 (4 blocs de luminance et au moins 2 blocs de chrominance dans chaque macrobloc) à chacun desquels est appliquée une transformation en cosinus discrète (DCT). Le bloc 8x8 de coefficients DCT résultant est quantifié. Le bloc à deux dimensions qui en résulte est balayé en zigzag pour être converti en une chaîne unidimensionnelle de coefficients DCT quantifiés. Quatrièmement, les informations annexes du macrobloc (type, vecteurs, etc.) ainsi que les données des coefficients quantifiés sont codées. Pour obtenir une efficacité maximale, un certain nombre de tables de codage à longueur variable sont définies pour les différents éléments de données. Un codage des longueurs de plage est appliqué aux données des coefficients quantifiés.

Le coefficient DCT du point (0,0) supérieur gauche du bloc représente une fréquence horizontale et verticale nulle : il est appelé coefficient DC (continu). Le coefficient DC étant proportionnel à la valeur moyenne des pixels du bloc 8x8, le codage prédictif permet une compression supplémentaire, car la différence des valeurs moyennes des blocs 8x8 voisins tend à être relativement petite. Les autres coefficients représentent une ou plusieurs fréquences spatiales horizontales et/ou verticales non nulles et sont appelés coefficients AC. Pour que le niveau de quantification des coefficients correspondant aux fréquences spatiales élevées favorise la création d'un coefficient nul, on choisit un pas de quantification tel que le système visuel humain (HVS) ait peu de chance de percevoir la perte de la fréquence spatiale concernée, sauf si la valeur du coefficient se trouve au-dessus de ce niveau de quantification. Le codage statistique des plages prévues de coefficients d'ordre élevé consécutifs de valeur nulle, contribue considérablement au gain de compression. Pour regrouper les coefficients non nuls au début de la série et pour coder autant de coefficients nuls que possible à la suite du dernier coefficient non nul, leur séquence est donnée par un balayage en zigzag qui concentre les fréquences spatiales élevées à la fin des séries.

Le codage à longueur variable (VLC) est une technique de codage statistique qui affecte des mots de code aux valeurs à coder. Des mots de code courts sont affectés aux valeurs de fréquence d'occurrence élevée, et des mots de code longs à celles d'occurrence peu fréquente. En moyenne, les mots de code courts plus fréquents sont majoritaires, en sorte que la chaîne codée est plus courte que les données d'origine.

L'invention consiste à utiliser et à modifier les vecteurs de mouvement différentiels des images P et/ou B, afin de pouvoir manipuler l'aspect et la validité visuelle de la séquence à laquelle appartiennent les images en question.

Selon un mode de réalisation particulier, le flux MPEG-2 (101) complet est analysé par le dispositif d'analyse (121) du portail (12) ; toutes les images P sont analysés en vue de trouver chacun de leurs vecteurs de mouvement différentiels. Pour chaque valeur trouvée, le système procède à sa sauvegarde dans le tampon (123) du portail (12), et elle est remplacée dans le flux par la valeur maximale autorisée par la norme, identiquement pour chaque valeur trouvée. Le flux transformé est stocké dans le tampon de sortie (122), sa taille est différente du flux d'origine (101), mais il est parfaitement lisible par n'importe quel lecteur (8) capable de lire le flux d'origine (101).

Selon un mode de réalisation particulier, toutes les images P du flux MPEG-2 (101) complet sont analysées par le dispositif d'analyse (121) du portail (12) en vue de trouver chacun de leurs vecteurs de mouvement différentiels. Pour diminuer la taille des données sauvegardées, on ne transformera que les vecteurs de mouvement différentiels d'un macrobloc sur deux ou trois. Le moyen de retrouver les images qui ont été modifiées sera conservé dans le tampon (123) du portail (12) avec les valeurs d'origines des vecteurs de mouvement différentiels transformés.

Selon un mode de réalisation particulier, toutes les images P du flux MPEG-2 (101) complet sont analysées par le dispositif d'analyse (121) du portail (12) en vue de trouver chacun de leurs vecteurs de mouvement différentiels. Afin d'avoir un flux transformé de taille identique au flux MPEG-2 d'origine (101) au niveau du tampon de sortie (122), on ne transformera qu'un certain nombre de bits dans le code VLC représentant la valeur traitée, de sorte que le code VLC résultant soit respectueux de la norme, et que la nouvelle valeur soit suffisamment éloignée de l'originale afin que la transformation soit la plus efficace possible.

Selon un mode de réalisation particulier, une partie seulement des images du flux MPEG-2 d'origine (101) est analysée et transformée, permettant ainsi de diminuer la taille des données mémorisées dans le tampon (123) du portail (12).

Lorsqu'il lit le train binaire, un décodeur classique MPEG-2 identifie le début d'une image codée, puis le type de l'image. Pour éviter toute confusion entre un boîtier décodeur standard souvent appelé « Set Top Box ou STB », le décodeur standard MPEG-2 sera appelé « Lecteur » (« Player » ou « Viewer ») dans la suite du document. Ce Lecteur peut être réalisé en hardware et/ou en software. Le lecteur MPEG-2 décode successivement chaque macrobloc de l'image. L'image est reconstruite quand tous ses macroblocs ont été traités. S'il s'agit d'une image I, elle constitue une image de référence pour les images subséquentes et elle est stockée à la place de l'image de référence la plus ancienne. Les images sont ainsi disponibles, sous forme numérique, pour post-traitement et affichage, au gré de l'application.

Dans le cas d'un programme audiovisuel de type MPEG-2, toutes les caractéristiques des images P en provenance du serveur (1) ou du portail (12) ne sont pas transmises vers le module (8). En particulier les caractéristiques conformes à l'invention sont les vecteurs de mouvement différentiels contenus dans les images P.

Certains vecteurs de mouvement différentiels de ces images P sont conservés dans le portail (12). Par contre, en lieu et place des vecteurs de mouvement différentiels de ces images P non transmises, le dispositif conforme à l'invention intercalera de faux vecteurs de mouvement différentiels de même nature que les vecteurs de mouvement différentiels enlevés et conservés dans le portail (12) de sorte que le Lecteur standard MPEG-2 du module (8) ne soit pas perturbé par ces modifications qu'il ignorera et reconstituera en sortie un flux de sortie MPEG-2 qui sera non correct du point de vue visuel pour un être humain mais correct du point de vue format MPEG-2.

Le Lecteur MPEG-2 du boîtier (8) est un Lecteur standard MPEG-2 et n'est en aucune manière modifié ou affecté par les changements apportés aux images P.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique de type RTC ou numérique, DSL, BLR, GSM, GPRS, UMTS, etc).

Ainsi donc, les programmes audiovisuels sont diffusés de façon classique en mode multidiffusion (« broadcast ») via le réseau de transmission large bande (4) de type hertzien, câble, satellite, numérique hertzien, DSL, etc. depuis le serveur (1) directement via la liaison (31) ou via le portail (12) via la liaison (2) et (3) vers le module décodeur (8) à travers la liaison (5). Chaque programme audiovisuel ainsi diffusé peut être crypté ou non, et, conformément à la présente invention, les flux de type MPEG-2 comportent des modifications au niveau de certaines images P et/ou B comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande relié à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les fonctions et les paramètres de remise en ordre et / ou de correction des vecteurs de mouvement différentiels modifiés des images P. Les vecteurs de mouvement différentiels modifiés des images P ainsi transmis ne sont jamais enregistrés dans le disque dur du boîtier (8) car les images P reconstituées sont directement affichées sur l'écran de visualisation (6) via la liaison (7) après avoir été traitées par le Lecteur du boîtier (8) à partir de sa mémoire locale volatile. Une fois traités et visualisés, les vecteurs de mouvement différentiels modifiés et/ou manquants des images P venant d'être transmis par le portail (12) seront effacés de la mémoire volatile locale du boîtier (8).

Selon un mode de réalisation particulier, le flux recomposé par le boîtier (8) n'est pas bit à bit identique au flux original. Le boîtier (8) modifie en effet légèrement certains vecteurs de mouvement de manière à ce que visuellement, le flux affiché sur l'écran de visualisation (6) soit identique au flux original (101), mais que certaines différences soient calculées et introduites au niveau binaire. La présence de ces différences complique en effet la tâche d'un utilisateur mal intentionné qui souhaiterait contourner la protection du flux vidéo. Ce calcul est effectué en fonction de caractéristiques du client, par exemple un identifiant numérique du boîtier (8) ou le numéro de série du boîtier (8). Les différences apportées aux vecteurs de mouvement sont introduites de plusieurs manières. Par exemple, elles consistent à incrémenter de un la valeur du champ motion_residual de certains vecteurs de mouvement. Les positions desdites différences sont déterminées par le boîtier (8) à l'aide d'un générateur de variables aléatoires initialisé avec un identificateur numérique du boîtier (8) ou le numéro de série du boîtier (8). Cette différence étant très légère, elle affecte à peine l'aspect visuel du flux recomposé sur l'écran de visualisation (6), mais le flux recomposé n'est plus bit à bit identique avec le flux original.

Avantageusement, les modifications apportées aux vecteurs de mouvement qui permettent d'obtenir une différence binaire entre le flux original (101) et le flux recomposé affiché sur l'écran de visualisation (6) visuellement identique au flux original (101), sont paramétrées via des informations présentes dans le deuxième flux envoyé par la connexion (10). Par exemple, le deuxième flux contient un champ binaire indiquant au boîtier (8) que la modification à apporter aux vecteurs de mouvement d'une image donnée du flux reconstitué consiste à ajouter une variable aléatoire pouvant prendre les valeurs -1, 0 et 1 aux champs motion_residual qu'elle contient.

Selon un mode de réalisation particulier les valeurs d'origines des vecteurs de mouvement différentiels des images P ainsi diffusées peuvent être cryptées ou non, par tout moyen de cryptage existant ou à venir. Il en est de même pour les algorithmes, les fonctions et les paramètres de remise en ordre des vecteurs de mouvement différentiels modifiés des images P.

A chaque fois que l'usager voudra regarder un programme enregistré dans le disque dur du boîtier (8) le boîtier (8) se connectera automatiquement vers le portail (12). De même, lorsque l'usager fera une pause, la transmission des informations de correction des valeurs d'origine des vecteurs de mouvement différentiels des images P en provenance du portail (12) sera interrompue jusqu'à la reprise de la visualisation, garantissant ainsi que toutes les informations d'un programme audiovisuel ne se retrouvent dans le boîtier (8) à un moment donné et évitant ainsi à une personne mal intentionnée de faire des copies pirates de ces enregistrements.

Selon un mode de réalisation particulier, le boîtier (8) comprend un lecteur de cartes à puce qui permettra au portail (12) d'authentifier l'usager propriétaire du boîtier (8) .

Selon un mode de réalisation particulier, pour un contenu MPEG-2 donné, la carte à puce contient ledit deuxième flux qui a été mémorisé par le portail (12).

Si cela est autorisé, la carte à puce permet également à l'usager d'effectuer des copies privées des programmes audiovisuels enregistrés sur le disque dur de son boîtier décodeur (8). Pour cela, si l'usager veut faire une copie privée d'un programme audiovisuel, il le fera de façon classique sur un magnétoscope via la liaison (7) qui relie le boîtier (8) à l'écran de visualisation (6).

Selon un autre mode de réalisation, si l'usager désire conserver une copie privée dans le disque dur de son boîtier, il l'indiquera au serveur qui enregistrera l'information « copie privée » pour ce programme dans la mémoire copie privée (124) du portail (12) et pour cet utilisateur authentifié par la carte à puce. Ensuite, chaque fois que l'usager voudra visionner cette copie privée, le boîtier (8) se connectera automatiquement au portail (12) et indiquera à ce dernier que l'usager veut faire une lecture de sa copie privée ; en retour, si la lecture de la copie privée est possible pour cet usager qui possède cette carte à puce et pour ce programme, le boîtier décodeur (8) recevra alors les vecteurs de mouvement différentiels manquants des images P ainsi que toutes les autres informations permettant la visualisation du programme audiovisuel constituant la copie privée.

Selon un mode de réalisation particulier, la copie dite privée pourra permettre à l'usager de regarder ce même programme audiovisuel de façon illimitée ou un nombre de fois déterminée à l'avance par l'offreur du service qui a autorisé cette copie privée.

La présente invention concerne également le boîtier physique (8) utilisé par le consommateur pour accéder aux données. Ce boîtier physique est situé au domicile de l'utilisateur. Il fournit un ensemble de fonctionnalités qui gèrent l'information appropriée à présenter selon la sélection de l'audience et gère la connexion et la communication avec le serveur distant.

Selon un mode de réalisation particulier le boîtier physique correspondant à l'agencement d'interfaçage vidéo (8) est réalisé comme un dispositif autonome fixe avec disque dur intégré.

Selon un mode de réalisation particulier le boîtier physique correspondant à l'agencement d'interfaçage vidéo (8) est réalisé comme un dispositif autonome portable (mobile) avec disque dur intégré et/ou lecteur de disques (CD, DVD, etc.).

Selon un mode de réalisation particulier le boîtier physique autonome (8) comprend un lecteur de cartes à puce.

Selon un autre mode de réalisation particulier l'agencement d'interfaçage vidéo (8) est réalisé comme une carte additionnelle qui sera installée dans un ordinateur de type PC et sera reliée à au moins une interface de réseau de transmission et de diffusion large bande (4) et à au moins une interface de réseau de télécommunication (10). Cette carte utilisera le disque dur de l'ordinateur PC pour l'enregistrement du premier flux, mais comportera son propre calculateur et sa propre mémoire volatile de façon à ne pas laisser à l'utilisateur du PC mal intentionné le moyen d'accéder aux informations complémentaires comme les vecteurs de mouvement différentiels modifiés des images P du deuxième flux.

Selon la présente invention, les serveurs vidéo et multimédia (1) et/ou (12) comprennent des moyens de codage, de transcodage et de brouillage de données vidéo, en particulier des moyens d'ajouter des informations cryptographiques et de sécurité au début et tout au long des séquences.

Il est enfin à noter que l'invention dégrade le flux MPEG-2 du point de vue visuel jusqu'à ne plus permettre la reconnaissance des scènes transmises et affichées sans avoir accès aux données et caractéristiques complémentaires, mais reconstitue totalement le flux MPEG-2 dans l'agencement d'interfaçage vidéo (8) sans aucune perte.

La présente invention sera mieux comprise grâce à la description suivante présentant la base physique de la présente invention et en référence à la figure 2 du dessin en annexe représentant un mode de réalisation préféré de cette dernière en tant qu'exemple non limitatif de réalisation particulièrement bien adaptée pour les réseaux câblés et de satellites. Le flux MPEG-2 (101) complet est analysé par le dispositif d'analyse (121) du portail (12) et sera ainsi séparé en un flux de type MPEG-2 mais dont une partie voire tous les vecteurs de mouvement différentiels des images P auront été traités et qui sera envoyé via la sortie (122) du portail vers le réseau de diffusion transmission large bande (4).

L'autre partie du flux MPEG-2 modifié sera mémorisée dans la mémoire tampon (122) du portail (12). Pour chaque flux MPEG-2 ainsi diffusé, le portail (12) conservera dans une mémoire tampon (122) les modifications qui auront été apportées à ce flux MPEG-2 par l'analyseur (121) du portail (12). Il est précisé que, pour un même flux d'entrée MPEG-2 (101) le traitement du flux peut être différent pour chaque utilisateur (8) et/ou pour chaque groupe d'utilisateurs (8). Ainsi, la mémoire tampon (123) du portail (12) comprend une zone de mémoire différente pour chaque utilisateur.

Dans les exemples réalisés, pour un premier utilisateur, les vecteurs de mouvement différentiels de certaines images P du flux MPEG-2 sont modifiés ; pour un deuxième utilisateur, certains vecteurs de mouvement différentiel des images P et de certaines images B du flux MPEG-2 sont modifiées ; dans le troisième exemple, le dispositif (8) est portable (mobile).

Décrivons maintenant en détail les différentes étapes pour ce premier utilisateur.

Le portail (12) a choisi le flux MPEG-2 (101) qu'il va devoir envoyer à l'utilisateur (8) pour être regardé en différé sur son écran de télévision (6). Cet utilisateur est relié à un réseau câblé numérique de diffusion (4) et à un réseau de télécommunication ADSL (10).

Le système d'analyse (121) du portail (12) va donc lire le flux entrant MPEG-2 (101) et, chaque fois qu'il détecte une image P, il la décompose en macroblocs, puis en blocs. Cette analyse lui permet de reconnaître dans le code les vecteurs de mouvement différentiels, et de substituer certains d'entre eux par des valeurs aléatoires, afin de rendre les images (et par conséquent la séquence) inacceptable du point de vue perception visuelle humaine. Les vraies valeurs des vecteurs de mouvement différentiels seront stockées dans le tampon de sortie (123), qui permettra plus tard la reconstitution de la séquence de départ dans le boîtier (8), en suivant le schéma inverse. Dans l'exemple réalisé, un macrobloc sur deux comporte un bloc (vecteurs de mouvement différentiels) modifié.

Le système d'analyse (121) inscrit alors la valeur du coefficient substitué de l'image P modifiée dans le tampon (123). Le système d'analyse (121) continue son analyse jusqu'à la fin du flux d'entrée MPEG-2.

Le nouveau flux MPEG-2 modifié est alors enregistré dans le tampon de sortie (122) pour être diffusé sur le réseau de diffusion (4) à travers la liaison (5). Les vecteurs de mouvement différentiels substitués des images P modifiées du flux MPEG-2 entrant (101) sont mémorisés dans le tampon (123) du portail (12).

Pendant ce temps, et de façon totalement non synchronisée, le flux de sortie MPEG-2 modifié en provenance du tampon de sortie (122) du portail (12) est diffusé via le réseau large bande (4) vers un ou plusieurs utilisateurs (8).

Chaque boîtier décodeur autorisé (8) qui souhaite enregistrer ce flux MPEG-2 ainsi modifié peut alors lire ce flux MPEG-2 et l'enregistrer sur son disque dur (85). Cette initiative d'enregistrement est laissée au décodeur (8) sous le contrôle du portail (12). Pour cela, le système d'analyse (121) avait inscrit au début du flux MPEG-2, une information de données supplémentaires qui précisait les destinataires de ce flux MPEG-2 modifié. Les destinataires peuvent être ainsi un destinataire (8) particulier et lui seul, un groupe de destinataires (8) ou l'ensemble des décodeurs (8) reliés au réseau (4).

La phase décrite ci-dessus correspond à la première phase de préparation du flux MPEG-2 par le portail (12), à sa transmission via le réseau large bande (4) et à son enregistrement dans un décodeur (8). Ce décodeur peut alors afficher ce flux MPEG-2 enregistré dans son disque dur (85). Pour cela, le système de synthèse (87) du décodeur (8) va lire le fichier MPEG-2 depuis son disque dur (85) et va l'envoyer vers un lecteur classique MPEG-2 (81). Si aucune donnée complémentaire n'est reçue par le système de synthèse (87), alors le flux MPEG-2 qui parvient au lecteur (81) est traité et affiché tel quel, ce qui provoque une distorsion importante de l'affichage sur l'écran de visualisation (6). En effet, les images P modifiées qui sont traitées par le système de synthèse (87) ne correspondent pas aux images P qui sont nécessaires pour une visualisation correcte, puisque certains vecteurs de mouvement différentiels ont été substitués par de faux vecteurs de mouvement différentiels. Par contre, comme le flux enregistré est bien un flux de type MPEG-2, le lecteur (81) ne fait aucune différence et affiche les informations sur l'écran de sortie (6) qui apparaissent bien comme des données d'un flux vidéo MPEG-2 mais totalement incohérentes à l'être humain qui regarde l'écran (6). Toute copie du flux MPEG-2 en provenance du disque dur (85) du boîtier (8) produira le même effet visuel lors de sa restitution par un lecteur MPEG-2 quelconque ; toute utilisation de cette copie qui serait mal intentionnée est donc vouée à l'échec.

Lorsque l'usager du décodeur (8) veut réellement visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG-2 modifié en provenance du disque dur (85) via le tampon de lecture (83). Le système de synthèse (87) établit alors une liaison avec le portail (12) via le réseau de télécommunication (10) qui est dans notre exemple une liaison DSL. Une fois cette liaison établie, et pendant toute la durée de visualisation du film ou du programme audiovisuel, le système de synthèse (87) fait parvenir de la mémoire tampon (123) du serveur (12) les vecteurs de mouvement différentiels substitués et les données correspondant aux images P modifiées du flux enregistré sur le disque dur (85). Ces vecteurs de mouvement différentiels et ces données de position parviennent au système de synthèse (87) via la mémoire tampon d'entrée (86) et sont stockées temporairement dans la mémoire volatile (88) du système de synthèse (87). A partir du flux MPEG-2 modifié qui parvient via le tampon (83) et à partir des vecteurs de mouvement différentiels et des données associées qui parviennent via le tampon (86) dans la mémoire (88), le système de synthèse (87) reconstitue de façon inverse au processus d'analyse décrit précédemment, en remplaçant les vecteurs de mouvement différentiels des images P modifiées par les vecteurs de mouvement différentiels réels et envoie le nouveau flux MPEG-2 ainsi reconstitué vers le lecteur (81) pour être affiché correctement sur l'écran (6). Dès leur utilisation, les vecteurs de mouvement différentiels à substituer et les données associées à ces images P sont effacés de la mémoire volatile (88).

Dans l'exemple réalisé, avant que le portail (12) n'autorise l'envoi des vecteurs de mouvement différentiels des images P et des données associées depuis son tampon (123), le portail (12) a vérifié que l'utilisateur du boîtier (8) était bien autorisé à le faire. Pour cela, le portail (12) lit les informations contenues sur la carte à puce (82) du boîtier (8) et vérifie que cet utilisateur est bien autorisé à regarder ce programme audiovisuel. Ce n'est qu'après cette vérification, que les vecteurs de mouvement différentiels et les données associées sont envoyés depuis le tampon (123) vers le boîtier (8) correspondant à cet utilisateur via le réseau (10).

Dans l'exemple réalisé, l'utilisateur a fait en plus une copie privée de son programme audiovisuel. Le système de synthèse (87) a donc inscrit dans une partie (84) du disque dur (85) des données complémentaires ainsi que le numéro de la carte à puce (82) et l'information « copie privée » comme données associées à ce programme audiovisuel. Lors de la prochaine lecture privée de ce programme audiovisuel, le système de synthèse (87) analysera ces données associées et informera ainsi le portail (12) que l'usager du décodeur (8) fait une lecture de la copie privée. Si cette fonction est autorisée pour cet utilisateur (8) par le portail (12), les vecteurs de mouvement différentiels et les données associées seront alors envoyés par le portail (12) vers le tampon (86) comme décrit ci-dessus. Dans le cas contraire, les vecteurs de mouvement différentiels et les données associées ne seront pas envoyés et l'utilisateur du décodeur (8) ne pourra pas regarder le flux MPEG-2 reconstitué.

Une variante du procédé ci-dessus consiste à appliquer une modification différente de : remplacer certaines valeurs de vecteurs de mouvement par des valeurs aléatoires. Une variante de mise en oeuvre utilisée inverse le signe des vecteurs de mouvement. Le résultat d'une telle modification est d'inverser le sens du mouvement entre deux images de référence. Ainsi, sur une scène brouillée de cette façon et présentant des mouvements, les mouvements sont inversés. Sur une vidéo présentant une rivière qui serpente entre des rochers, on voit l'eau remonter la pente. Sur une vidéo présentant un travelling (balayage transversal de la caméra), le sens du travelling est inversé (au lieu d'aller de gauche à droite, il va de droite à gauche). De nombreux artefacts sont de plus visibles. Ces inversions de mouvements sont toutefois annulées à chaque image I transmise, c'est pourquoi une vidéo brouillée de cette façon présente des mouvements très saccadés.

Pour cela, on utilise le fait que les composantes principales des vecteurs de mouvement (appelées motion_code pour la norme MPEG-2) sont codées par un codage VLC. Une suite binaire donnée, de longueur variable, code pour une valeur. Ainsi 010 code pour 1, et 0010 pour 2. Ces valeurs peuvent aussi bien être positives que négatives. Le signe d'un VLC est déterminé par son bit de poids faible. Ainsi, 011 code pour -1 et 0011 pour -2. Pour inverser le signe des vecteurs de mouvement présents dans un flux MPEG-2, il suffit donc d'inverser le bit de poids faible de tous les vecteurs de mouvement. Ainsi, dans le cas particulier de MPEG-2, le code contient un bit qui indique le signe du vecteur. Dans cette variante, le dispositif d'analyse (121) lit le flux d'origine et pour chaque vecteur de mouvement de chaque bloc, inverse son signe, c'est-à-dire qu'il remplace le bit de signe par son alternative (0 par 1 et 1 par 0). Le deuxième flux est alors constitué d'une seule information destinée au dispositif de synthèse (87), qui spécifie que la composante principale de chaque vecteur de mouvement a été inversée. Dans ce cas, la taille du deuxième flux est très faible. Afin de respecter le procédé qui demande que le deuxième flux soit fourni à la demande du dispositif de synthèse, le deuxième flux peut être constitué d'un fichier spécifiant pour chaque vecteur de mouvement la transformation qui lui a été appliquée par le dispositif d'analyse (121).

Dans une variante de ce mode de réalisation, seuls certains vecteurs de mouvement sont modifiés de cette façon et ledit deuxième flux spécifie les vecteurs de mouvement modifiés. Du fait du codage différentiel des données dans un flux de type MPEG-2, le résultat visuel est tout aussi dégradé.

Dans un autre mode de réalisation de ce procédé, la modification apportée aux vecteurs de mouvement est l'annulation de ceux-ci. Pour cela, le dispositif d'analyse (121) remplace toutes les valeurs des vecteurs de mouvement par la valeur nulle, en respectant les codes VLC valides pour le format de flux choisi. Ledit premier flux généré ainsi peut être visualisé, mais le mouvement est très saccadé puisqu'entre deux images de type I, le mouvement des objets de la scène représentée est nul. Ledit deuxième flux généré par le dispositif d'analyse (121) est alors constitué des valeurs réelles des vecteurs de mouvement. La taille dudit deuxième flux est ainsi fortement dépendante du nombre de vecteurs de mouvements modifiés.

Dans un autre mode de réalisation de ce procédé, le vecteur de mouvement différentiel original est substitué par une valeur aléatoire qui a une taille différente du vecteur de mouvement du flux d'origine (101). Le fait de changer le nombre de bits sur lesquels est codé un vecteur de mouvement a pour effet d'augmenter la dégradation visuelle associée du flux modifié obtenu stocké dans le tampon de sortie (122).

Dans un autre mode de réalisation de ce procédé, le vecteur de mouvement différentiel original est substitué par une valeur aléatoire qui a une taille différente du vecteur de mouvement du flux d'origine (101), mais le débit binaire du flux modifié stocké dans le tampon de sortie (122) est identique à celui du flux original (101). Pour ce faire, lorsque le procédé commence à traiter le contenu d'une image, il substitue des vecteurs de mouvement par des leurres ayant une taille binaire inférieure, tout en conservant en permanence dans la mémoire du dispositif d'analyse (121) la différence de taille relative des flux en entrée (101) et en sortie (122). Ainsi, par exemple, après avoir substitué deux vecteurs dont les champs motion_code sont respectivement codés sur 5 bits et sur 8 bits par des vecteurs respectivement codés sur 3 et 1 bits, la différence de taille entre le flux de sortie et le flux en entrée est négative de 9 bits. Lorsque cette différence passe sous un certain seuil, comme -10 par exemple, le dispositif d'analyse (121) insère des leurres de taille inférieure à celle des coefficients d'origine. Inversement, lorsque cette différence repasse au-dessus d'un certain seuil comme -2 par exemple, le dispositif d'analyse (121) se remet à diminuer la taille des coefficients insérés dans le flux modifié stocké dans le tampon de sortie (122). En agissant ainsi sur l'ensemble de l'image, la différence calculée à la fin du traitement de l'image courante est proche de zéro et négative si les seuils utilisés sont négatifs. Ainsi en complétant la fin de l'image avec du bourrage (bits de valeur nulle) l'image modifiée a exactement la même taille que l'image d'origine. De même, en agissant ainsi sur toutes les images du flux d'entrée (101), le flux modifié en sortie (122) conserve le même débit binaire que le flux d'origine (101) alors même que les coefficients modifiés ont une taille différente de ceux d'origine.

Dans un autre mode de réalisation de ce procédé, le vecteur de mouvement inséré dans le flux modifié dans le tampon de sortie (122) est obtenu à l'aide d'un calcul opéré sur le vecteur d'origine. Ce calcul est par exemple une incrémentation de 1 appliquée sur le motion_code du vecteur, en utilisant un calcul cyclique à base de modulo pour que la valeur du motion_code reste dans la plage [-16 ; 16] comme prévu par la norme. L'addition est réalisée avant le codage VLC (Codage à longueur Variable) du motion_code de façon à ce que vecteur généré soit conforme à la norme MPEG-2. Pour ce mode de réalisation, le deuxième flux stocké dans le tampon de sortie (123) contient des informations permettant au poste client (8) d'effectuer l'opération inverse de récupération des vecteurs d'origine en soustrayant 1 aux motion_codes modifiés.

Dans un autre mode de réalisation de ce procédé, le vecteur de mouvement inséré dans le flux modifié est obtenu à l'aide d'un calcul opéré sur le vecteur d'origine et paramétré par une clé numérique. Par exemple, l'opération consiste à ajouter une clé numérique à chaque motion_code de chaque vecteur, la clé numérique et un identifiant de l'opération inverse permettant la reconstitution des vecteurs d'origine étant précisés au sein du deuxième flux stockés dans le tampon (123).

Dans un autre mode de réalisation du procédé décrit dans le paragraphe précédent, l'opération est effectuée sur le champ motion_residual de chaque vecteur.

Dans un autre mode de réalisation de ce procédé, les modifications apportées aux vecteurs de mouvements sont de deux types. Certains vecteurs de mouvement sont remplacés par des valeurs aléatoires, et au moins un des autres vecteurs de mouvement insérés dans le flux modifié en sortie (122) est obtenu à l'aide d'un calcul opéré sur le vecteur d'origine et est paramétré par une clé numérique, ladite clé étant égale à la valeur d'origine du motion_code du dernier vecteur modifié par substitution avec une valeur aléatoire. Le deuxième flux stocké dans le tampon (123) contient alors les valeurs d'origine des vecteurs substitués par des valeurs aléatoires ainsi qu'un indicateur de l'opération à appliquer sur les vecteurs modifiés pour obtenir le vecteur d'origine.

Par exemple, l'opération effectuée sur les vecteurs non substitués par des valeurs aléatoires consiste à ajouter la valeur du motion_code du dernier vecteur substitué par une valeur aléatoire, au motion_code du vecteur à modifier.

Dans un autre mode de réalisation, l'opération effectuée sur les vecteurs non substitués par des valeurs aléatoires consiste en l'ajout d'une valeur obtenue en sortie d'un générateur de variables pseudo aléatoires initialisées avec la valeur du dernier vecteur de mouvement substitué par une variable aléatoire.

Dans un autre exemple, l'opération effectuée sur les vecteurs non substitués par des valeurs aléatoires consiste en l'ajout d'une valeur obtenue en sortie d'un générateur de variables pseudo aléatoires initialisé avec le résultat de l'addition de la valeur du dernier vecteur de mouvement substitué par une variable aléatoire avec le nombre d'opérations du même type déjà effectuées dans l'image courante ou depuis le début de l'analyse du flux d'entrée (101).

Dans tous ces exemples, l'addition utilisée sur les motion_codes des vecteurs à modifier est effectuée avant le codage VLC desdits motion_codes de façon à rester conforme à la norme MPEG-2, et est cyclique de façon à ce que la valeur obtenue en sortie reste dans la plage [-16 ;16] de variation des motion_codes. L'opération mathématique exacte utilisée est un addition modulo 32 suivie d'une soustraction de 16.

Décrivons maintenant en détail les différentes étapes pour le deuxième utilisateur (8).

Dans ce deuxième cas, le réseau de diffusion (4) est un réseau de satellites et le réseau de télécommunication (10) est un système de téléphonie cellulaire de faible bande passante de type GSM ou GPRS.

De façon identique à la description ci-dessus, l'utilisateur du décodeur (8) va recevoir les flux MPEG-2 et les données complémentaires depuis le portail (12).

Par contre, dans l'exemple réalisé, au lieu de modifier chaque image P, le système d'analyse (121) ne prend qu'une image P sur n où n est un nombre aléatoire compris entre 1 et 12 et prend en compte des images B. Ainsi, avant l'envoi du flux MPEG-2 à partir du tampon de sortie (122), le système d'analyse (121) va lire le flux d'entrée MPEG-2 (101) et après tirage du nombre aléatoire n, le système de synthèse modifie les vecteurs de mouvement différentiels à la nième image P du flux MPEG-2. Après chaque image P ainsi modifiée, le système d'analyse (121) va faire un nouveau tirage d'un nombre n aléatoire. Chaque nombre aléatoire ainsi utilisé est enregistré dans le tampon (123) du portail (12). Pour les images B, le système d'analyse (121) prend en compte une image B sur m où m est un nombre aléatoire compris entre 1 et 5, dans une trame pour laquelle l'image P n'a pas été modifiée.

Le système d'analyse (121) du portail (12) lit le flux entrant MPEG-2 (101) et, chaque fois qu'il détecte une n^{ième} image P ou une m^{ième} image B, il la décompose en macroblocs, puis en blocs. Cette analyse lui permet de reconnaître dans le code les vecteurs de mouvement différentiels, et de substituer certains d'entre eux par des valeurs aléatoires, afin de rendre les images (et par conséquent la séquence) inacceptables de point de vue perception visuelle humaine. Les vraies valeurs des vecteurs de mouvement différentiels seront stockées dans le tampon de sortie (123), qui permettra plus tard la reconstitution de la séquence de départ dans le boîtier (8), en suivant le schéma inverse.

De plus, dans ce deuxième exemple réalisé, tous les vecteurs de mouvement différentiels de cette nième image P ne seront pas modifiés. Seul un macrobloc sur deux comporte un bloc (vecteurs de mouvement différentiels) modifié, tout en respectant l'égalité des fréquences de modification pour les blocs d'un macrobloc. De plus, la substitution de chaque vecteur de mouvement différentiel se fait par un vecteur de mouvement différentiel calculé de façon aléatoire, mais sa valeur est comparée à la valeur du vecteur de mouvement différentiel à substituer de façon à vérifier son écart. Si cet écart est trop faible, un autre nombre aléatoire est calculé de façon à augmenter l'écart entre le vecteur à substituer et le vecteur de substitution.

Il en est de même pour les images B.

Pour la reconstitution du flux MPEG-2, le décodeur (8) lit les tampons (86) et (87) et décode les éléments de données du train binaire, conformément à la syntaxe définie.

Lorsqu'il lit le train binaire, le décodeur identifie le début d'une image codée, puis le type d'image. Il décode successivement chaque macrobloc de l'image. Le type de macrobloc et les vecteurs de mouvement sont utilisés pour construire une prédiction du macrobloc courant, fondée sur des images de référence antérieures et futures qui ont été stockées dans le décodeur. Les données des vecteurs de mouvement différentiels sont décodées. Le résultat est ajouté au signal de prédiction, avec une dynamique définie. Avant d'envoyer le flux MPEG-2 au lecteur (81), le système de synthèse (87) remplace les vecteurs de mouvement différentiels des images P et B qui ont été substitués par ceux du flux provenant du tampon (86).

Lors de la reconstitution du flux MPEG-2 par le système de synthèse (87) du décodeur (8), la lecture de ces nombres aléatoires et des vecteurs de mouvement différentiels substitués depuis le tampon de sortie (123) du portail (12) et la lecture du flux MPEG-2 ainsi modifié depuis le disque dur (85) du boîtier (8) permettent au système de synthèse (87) de reconstituer les images P et B et d'envoyer le tout au lecteur (81).

L'image est reconstruite par le lecteur (81) quand tous ces macroblocs ont été traités. Dans l'exemple réalisé pour cet utilisateur, il a été constaté que le deuxième flux demandait une bande passante inférieure à un pour mille de la bande passante nécessaire pour transmettre le flux MPEG-2 de haute qualité, soit moins de quatre kilobits par seconde pour le deuxième flux vis-à-vis de quatre mégabits par seconde pour le premier flux MPEG-2.

Décrivons maintenant en détail les différentes étapes pour ce troisième utilisateur sur la figure 3.

Dans cette réalisation, le flux MPEG-2 est traité par le système d'analyse (12) de la même manière que le flux MPEG-2 de la deuxième réalisation.

Toutefois, le premier flux MPEG-2 modifié est inscrit et enregistré sur un support physique (41) de type CD à partir de la mémoire tampon de sortie du système d'analyse (12).

Le deuxième flux est mémorisé dans le tampon (123) et est également enregistré en plus sur un support physique (10a) de format carte de crédit constitué par une carte à puce et une mémoire flash. Cette carte (10a) sera lue par lecteur de carte (82) du dispositif (8). Le dispositif (8) est un système autonome, portable et mobile. Dans la réalisation, le dispositif (8) comprend le système de synthèse (87), le lecteur standard MPEG-2 (81), les deux mémoires tampons (86) et (83) ainsi que le lecteur de disque (85).

Le dispositif (8) comprend en plus un écran intégré (61) de type écran plat qui permet à l'utilisateur de visionner directement ses programmes audiovisuels sur son dispositif (8) autonome.

Pour visualiser un programme audiovisuel de type MPEG-2, l'utilisateur du dispositif (8) introduit dans son lecteur de disque (85) un disque (42) de type (41) identique à celui enregistré par le système d'analyse (12). Ce disque (42) contient ainsi un flux MPEG-2 de type premier flux, c'est-à-dire avec les vecteurs de mouvement différentiels de certaines images P et/ou B substitués.

L'utilisateur du dispositif (8) peut donc visualiser ce flux MPEG-2 sur son écran (61) intégré à son dispositif. Toutefois, en raison de la substitution des vecteurs de mouvement différentiels, le flux MPEG-2 ne sera pas correct du point de vue visuel. Pour rendre le flux correct visuellement, l'utilisateur introduit dans le lecteur de carte à puce (82) la carte mémoire (10a) contenant le deuxième flux avec les vecteurs de mouvement différentiels. Le système de synthèse reconstitue alors le flux MPEG-2 correct à partir du premier flux provenant du disque (42) et du deuxième flux provenant de la carte (10a) connectée au lecteur (82).

Dans un agencement particulier, la carte à puce (10a) contient également les applications et les algorithmes qui seront exécutés par le système de synthèse (87).

Dans un autre agencement particulier, la carte à puce (10a) contient les données et les vecteurs de mouvement différentiels de plusieurs deuxième flux pour la reconstitution de plusieurs flux MPEG-2.

Dans un agencement particulier, le dispositif (8) comprend une liaison cellulaire vers un réseau GSM ou GPRS (10).

## Revendications

1. procédé pour la distribution de séquences vidéos selon un format de flux nominal constitués par une succession d'images, chaque image étant constituée d'une succession de blocs, et dans lequel au moins un desdits blocs d'une desdites images est calculé par prédiction de mouvement par rapport à au moins une image dite de référence, ladite prédiction de mouvement étant codée dans le flux avec au moins un vecteur de mouvement, ledit flux sur lequel on procède, avant la transmission à un décodeur (8), à une analyse pour générer un premier flux modifié, présentant le format d'un flux nominal, et présentant des images modifiées par la substitution de certaines données par des données de même nature mais aléatoires, et un deuxième flux d'un format quelconque, comportant les données substituées et les informations numériques aptes à permettre la reconstruction dudit flux modifié, puis à transmettre séparément, en temps réel ou en temps différé les deux flux ainsi générés depuis le serveur vers le décodeur (8), et pour lequel on calcule sur le décodeur (8) une synthèse d'un flux au format nominal en fonction dudit premier flux et dudit deuxième flux **caractérisé en ce que** ladite modification consiste à modifier au moins un desdits vecteurs de mouvement par substitution de certaines valeurs des vecteurs de mouvement par des valeurs de même nature mais aléatoires, et que ledit deuxième flux comporte les valeurs des vecteurs de mouvement substituées et les informations numériques aptes à permettre la reconstruction desdites images modifiées.

2. Procédé pour la distribution de séquences vidéos selon la revendication 1, **caractérisé en ce que** le format de flux nominal est défini par la norme MPEG-2.

3. Procédé pour la distribution de séquences vidéos selon l'une des revendications précédentes, **caractérisé en ce que** le flux au format nominal calculé sur le décodeur (8) est visuellement identique au flux original et différent du point de vue binaire du flux original, ladite différence binaire étant le résultat d'un calcul effectué sur le décodeur (8), ledit calcul étant paramétré soit par des données caractéristiques du client, soit par des informations transmises au sein dudit deuxième flux.

4. Procédé pour la distribution de séquences vidéos selon l'une des revendications précédentes, **caractérisé en ce que** ladite analyse décide des valeurs des vecteurs de mouvement à modifier en fonction de la taille voulue pour ledit deuxième flux.

5. Procédé pour la distribution de séquences vidéos selon l'une des revendications précédentes, **caractérisé en ce que** ladite analyse décide des valeurs des vecteurs de mouvement à modifier en fonction de la dégradation désirée pour ledit premier flux modifié.

6. Procédé pour la distribution de séquences vidéos selon l'une des revendications précédentes, **caractérisé en ce que** ladite modification est une substitution par une valeur aléatoire de taille différente de la taille du vecteur original.

7. Procédé pour la distribution de séquences vidéos selon la revendication précédente, **caractérisé en ce que** les modifications de la taille des vecteurs de mouvement sont effectuées de manière à ce que la taille binaire de chaque image dudit premier flux modifié soit identique à celle de l'image du flux original à partir de laquelle elle a été calculée.

8. Procédé pour la distribution de séquences vidéos selon l'une des revendications précédentes, **caractérisé en ce que** certains vecteurs modifiés sont le résultat d'un calcul effectué sur les vecteurs d'origine correspondants, un identifiant de ce calculé étant précisé dans ledit deuxième flux.

9. Procédé pour la distribution de séquences vidéos selon la revendication 8, **caractérisé en ce que** ledit calcul est paramétré à l'aide d'une clé numérique, ladite clé numérique étant précisée dans ledit deuxième flux.

10. Procédé pour la distribution de séquences vidéos selon la revendication 9, incluant des substitutions de vecteurs de mouvement par des vecteurs aléatoires et des substitutions de vecteurs de mouvement par des vecteurs résultant d'un calcul effectué sur les vecteurs d'origine, **caractérisé en ce que** ladite clé numérique utilisée comme paramètre par ledit calcul est la valeur d'origine du dernier vecteur de mouvement substitué par une valeur aléatoire.

11. Procédé pour la distribution de séquences vidéos selon l'une des revendications précédentes, **caractérisé en ce que** la transmission dudit premier flux est réalisée à travers un réseau large bande (4).

12. Procédé pour la distribution de séquences vidéos selon l'une des revendications précédentes, **caractérisé en ce que** la transmission dudit deuxième flux est réalisée à travers un réseau téléphonique commuté, ou à travers un réseau de type DSL ou à travers un réseau BLR ou à travers un réseau téléphonique mobile utilisant les normes GSM, GPRS ou UMTS.

13. Procédé pour la distribution de séquences vidéos selon l'une des revendications 1 à 12, **caractérisé en ce que** la transmission dudit deuxième flux est réalisée à travers un support matériel distribué physiquement (10a).

14. Equipement pour la fabrication d'un flux vidéo en vue de la mise en oeuvre du procédé selon l'une des revendications précédentes, comportant au moins un serveur multimédia (1,12) contenant les séquences vidéos originelles, au moins une interface d'enregistrement de stockage (122) du contenu d'un premier flux, ledit équipement étant apte à coopérer avec un agencement d'interfaçage vidéo et au moins une interface d'affichage (6), **caractérisé en ce qu'**il comporte un dispositif d'analyse du flux vidéo (121) provenant dudit serveur pour générer ledit premier flux modifié par substitution de certaines valeurs d'au moins un des vecteurs de mouvement par des valeurs de même nature mais aléatoires, et un deuxième flux comportant les valeurs des vecteurs de mouvement substituées, et un moyen de recomposition du flux original à partir des deux flux.

15. Système pour la transmission d'un flux vidéo pour la mise en oeuvre du procédé selon l'une au moins des revendications 1 à 13, **caractérisé en ce qu'**il comprend un équipement de la fabrication d'un flux vidéo selon la revendication précédente, au moins un décodeur (8) d'un flux vidéo et au moins un réseau de communication (10) entre l'équipement de production et au moins un desdits décodeurs (8).

## Claims

1. Method for the distribution of video sequences according to a nominal data-flow format comprising a succession of images, each image comprising a succession of blocks, and in which at least one of the blocks in one of the images is calculated by motion prediction relative to at least a so called reference image, said motion prediction being encoded in the data-flow with at least one motion vector, said data-flow being subjected, before the transmission to a decoder, to an analysis in order to generate a first modified data-flow, having the format of a nominal data-flow, and having images modified by the substitution of certain data by random data of the same nature and a second data-flow of any format, comprising the substituted data and digital information likely to allow the reconstruction of the modified data-flow, then to separately transmit, in real time or deferred time, the two data-flows thus generated from a server toward the decoder, and for which is calculated in the decoder a synthesis of a data-flow of nominal format depending on said first data-flow and said second data-flow, **characterised in that** said modification consists in modifying at least one of said motion vectors by substituting certain values of motion vectors by random values of the same nature and **in that** the second data-flow comprises the substituted values of the motion vectors and the digital information allowing for the reconstruction of the modified images.

2. Method for the distribution of video sequences according to claim 1, **characterised in that** the nominal data-flow format is defined by the MPEG-2 standard.

3. Method for the distribution of video sequences according to one of the preceding claims, **characterized in that** the nominal data-flow format calculated in the decoder is visually identical to the original data-flow and different from the original data-flow from a binary point of view, said binary difference being a result of a calculation carried out in the decoder, the calculation being parameterized either by some distinguishing data pertaining to a particular client, or by information transmitted within said second data-flow.

4. Method for the distribution of video sequences according to one of the preceding claims, **characterized in that** said analysis determines values of motion vectors to be modified as a function of a desired size of the second data-flow.

5. Method for the distribution of video sequences according to one of the preceding claims, **characterized in that** said analysis determines values of the motion vectors to be modified as a function of a desired deterioration of the modified first data-flow.

6. Method for the distribution of video sequences according to one of the preceding claims, **characterized in that** said modification is a substitution by a random value of a size that is different from the size of the original vector

7. Method for the distribution of video sequences according to one of the preceding claim, **characterized in that** the modifications of the size of the motion vectors are carried out in such a way that a binary size of each image of the first modified data-flow is identical to that of the image of the original data-flow from which it was calculated.

8. Method for the distribution of video sequences according to one of the preceding claims **characterized in that** some of the modified vectors are the result of a calculation performed on corresponding original vectors, an identifier of the calculation being specified in the second data-flow.

9. Method for the distribution of video sequences according to the claim 8, **characterized in that** said calculation is parameterized using a digital key, said digital key being specified in the second data-flow

10. Method for the distribution of video sequences according to the claim 9, further comprising substitutions of motion vectors by random vectors and substitutions of motion vectors by vectors resulting from a calculation performed on the original vectors, **characterized in that** said digital key used as a parameter in the calculation has the original value of a last motion vector substituted by a random vector.

11. Method for the distribution of video sequences according to one of the preceding claims **characterized in that** the transmission of said first data-flow is carried out through a broadband network.

12. Method for the distribution of video sequences according to one of the preceding claims, **characterized in that** the transmission of the second data-flow is carried out through a switched telephone network, a DSL (Digital Subscriber Line) network, a BLR (local radio loop) network or a mobile telephone network using GSM, GPRS or UMTS standards

13. Method for the distribution of video sequences according to one of the claims 1 to 12, **characterized in that** the transmission of the second data-flow is carried out through physically distributed support equipment.

14. Equipment for producing a video data-flow suitable for carrying out the method according to one of the preceding claims, comprising at least one multimedia server containing original video sequences, at least a storage recording interface for the content of a first data-flow, said equipment being able to cooperate with a video interface set-up and at least a display interface, **characterized in that** it comprises a device suitable for analysing the video data-flow coming from the multimedia server for generating said first modified data-flow by substituting certain values of at least one of the motion vectors by random values of the same nature, and a second data-flow comprising the substituted values of the motion vectors, and means to reconstitute the original data-flow from these two data-flows.

15. System for the transmission of a video data-flow to carry out the method according to at least one of claims 1 to 13, **characterized in that** it comprises equipment for the production of a video data-flow according to the preceding claim, at least a video data-flow decoder and at least a communication network between the production equipment and at least one of said decoders (8).

## Patentansprüche

1. Verfahren zum Verbreiten von Videosequenzen in einem üblichen kontinuierlichen Übertragungsformat, das durch eine Abfolge von Bildern gebildet ist, wobei jedes Bild durch eine Abfolge von Blöcken gebildet ist und bei dem wenigstens einer der eines der Bilder bildenden Blöcke durch Vorhersage einer Bewegung in Bezug auf wenigstens ein Bild, das als Referenz bezeichnet wird, berechnet wird, wobei die Vorhersage der Bewegung in der kontinuierlichen Übertragung mit wenigstens einem Bewegungsvektor kodiert ist, wobei diese kontinuierliche Übertragung vor dem Übermitteln an einen Decoder (8) einer Analyse unterzogen wird, um eine modifizierte erste kontinuierliche Übertragung zu erzeugen, die das übliche kontinuierliche Übertragungsformat und die Bilder aufweist, die durch Ersetzen von bestimmten Daten durch Daten wesensgleichen aber zufälligen Charakters modifiziert worden sind, und um eine zweite kontinuierliche Übertragung mit einem beliebigen Format zu erzeugen, die die ersetzten Daten und die numerischen Informationen enthält, um das Wiederherstellen der kontinuierlichen Übertragung zu gestatten und anschließend getrennt in Echtzeit oder zeitverzögert die weiterhin somit erzeugten kontinuierlichen Übertragungen über den Server zu dem Decoder (8) zu übermitteln, und bei dem in dem Decoder (8) eine Synthese eines üblichen kontinuierlichen Übertragungsformats in Abhängigkeit der ersten kontinuierlichen Übertragung und der zweiten kontinuierlichen Übertragung berechnet wird, **dadurch gekennzeichnet, dass** die Modifizierung darin besteht, wenigstens einen der Bewegungsvektoren durch Ersetzen bestimmter Werte der Bewegungsvektoren durch wesensgleichen aber zufälligen Charakter zu modifizieren und dass die zweite kontinuierliche Übertragung die Werte von substituierten Bewegungsvektoren und die numerischen Informationen aufweist dazu eingerichtet sind, das Wiederherstellen der modifizierten Bilder zu gestatten.

2. Verfahren zum Verbreiten von Videosequenzen nach Anspruch 1, **dadurch gekennzeichnet, dass** das übliche kontinuierliche Übertragungsformat durch die MPEG-2-Norm definiert ist.

3. Verfahren zum Verbreiten von Videosequenzen nach einem der vorangehenden Ansprüche, **dadurch gekennzeichnet, dass** die durch den Decoder (8) berechnete kontinuierliche Übertragung im üblichen Format zu der ursprünglichen kontinuierlichen Übertragung visuell identisch und aus binärer Sicht zu der ursprünglichen kontinuierlichen Übertragung verschieden ist, wobei der binäre Unterschied das Ergebnis einer durch den Decoder (8) durchgeführten Berechnung ist, wobei die Berechnung entweder durch charakteristische Daten des Kunden oder durch in der zweiten kontinuierlichen Übertragung enthaltene Informationen parametrisiert ist.

4. Verfahren zum Verbreiten von Videosequenzen gemäß einem der vorangehenden Ansprüche, **dadurch gekennzeichnet, dass** die Analyse in Abhängigkeit der für die zweite kontinuierliche Übertragung gewünschte Größe die Werte von zu modifizierenden Bewegungsvektoren festlegt.

5. Verfahren zum Verbreiten von Videosequenzen nach einem der vorangehenden Ansprüche, **dadurch gekennzeichnet, dass** die Analyse in Abhängigkeit der für die erste modifizierte kontinuierliche Übertragung gewünschte Degradation die Werte von zu modifizierenden Bewegungsvektoren bestimmt.

6. Verfahren zum Verbreiten von Videosequenzen nach einem der vorangehenden Ansprüche, **dadurch gekennzeichnet, dass** die Modifikation ein Ersatz durch einen zufälligen Größenwert ist, der von der Größe des Originalvektors verschieden ist.

7. Verfahren zum Verbreiten von Videosequenzen nach dem vorangehenden Anspruch, **dadurch gekennzeichnet, dass** die Modifikationen der Größe der Bewegungsvektoren so durchgeführt werden, dass die binäre Größe jedes Bildes der modifizierten ersten kontinuierlichen Übertragung identisch zu der des Bildes der ursprünglichen kontinuierlichen Übertragung ist, ausgehend von der sie berechnet worden ist.

8. Verfahren zum Verbreiten von Videosequenzen nach einem der vorangehenden Ansprüche, **dadurch gekennzeichnet, dass** bestimmte modifizierte Vektoren das Ergebnis einer Berechnung sind, die auf der Grundlage von zugeordneten ursprünglichen Vektoren durchgeführt worden ist, wobei ein Bestandteil der Berechnung in der zweiten kontinuierlichen Übertragung angegeben ist.

9. Verfahren zum Verbreiten von Videosequenzen nach Anspruch 8, **dadurch gekennzeichnet, dass** die Berechnung mit Hilfe eines numerischen Schlüssels parametrisiert ist, wobei der numerische Schlüssel in der zweiten kontinuierlichen Übertragung angegeben ist.

10. Verfahren zum Verbreiten von Videosequenzen nach Anspruch 9, das Substituierungen von Bewegungsvektoren durch zufällige Vektoren und Substituierungen von Bewegungsvektoren durch sich aus einer Berechnung ergebenden Vektoren, die auf der Grundlage von Ursprungsvektoren durchgeführt wird, umfasst, **dadurch gekennzeichnet, dass** der als Parameter für die Berechnung verwendete numerische Schlüssel der Ursprungswert des letzten Bewegungsvektors ist, der durch einen Zufallswert ersetzt worden ist.

11. Verfahren zum Verbreiten von Videosequenzen nach einem der vorangehenden Ansprüche, **dadurch gekennzeichnet, dass** das Verbreiten der ersten kontinuierlichen Übertragung über ein Breitbandnetz (4) durchgeführt wird.

12. Verfahren zum Verbreiten von Videosequenzen nach einem der vorangehenden Ansprüche, **dadurch gekennzeichnet, dass** das Übermitteln der zweiten kontinuierlichen Übertragung über ein Fernsprechfestnetz oder über ein DSL-Netz oder über ein lokales Netzwerk oder über ein die Standards GSM, GPRS oder UMTS benutzendes Mobilfunknetzwerk durchgeführt wird.

13. Verfahren zum Verbreiten von Videosequenzen nach einem der Ansprüche 1 bis 12, **dadurch gekennzeichnet, dass** das Übermitteln der zweiten kontinuierlichen Übertragung einer körperlich verteilten Hardware (10a) durchgeführt wird.

14. Einrichtung zum Erzeugen einer kontinuierlichen Videoübertragung zum Durchführen des Verfahrens nach einem der vorangehenden Ansprüche, die wenigstens einen Multimediaserver (1, 12) aufweist, der über die ursprünglichen Videosequenzen verfügt, mit wenigstens einer Aufzeichnungsschnittstelle der Speicherung (122) des Inhalts der ersten kontinuierlichen Übertragung, wobei die Einrichtung dazu eingerichtet ist, mit einer Videoschnittstellenvorrichtung und mit wenigstens einer Anzeigeschnittstelle (6) zusammenzuwirken, **dadurch gekennzeichnet, dass** sie über eine Analysevorrichtung für die aus dem Server stammende kontinuierliche Videoübertragung (121) verfügt, um die durch Ersetzen von bestimmten Werten wenigstens eines der Bewegungsvektoren durch wesensgleiche aber zufällige Werte modifizierte erste kontinuierliche Übertragung und eine zweite kontinuierliche Übertragung zu erzeugen, die die Werte der substituierten Bewegungsvektoren umfasst, und ein Mittel zum Wiederherstellen der ursprünglichen kontinuierlichen Übertragung auf der Grundlage der beiden kontinuierlichen Übertragungen aufweist.

15. System zum Übermitteln einer kontinuierlichen Videoübertragung zum Durchführen des Verfahrens nach einem der Ansprüche 1 bis 13, **dadurch gekennzeichnet, dass** es eine Einrichtung zum Erzeugen einer kontinuierlichen Videoübertragung gemäß dem vorangehenden Anspruch aufweist, über wenigstens einen Decoder (8) für eine kontinuierliche Videoübertragung verfügt und mit wenigstens einem Kommunikationsnetzwerk (10) zwischen der Erzeugungsausrüstung und wenigstens einem der Decoder (8) ausgestattet ist.
